(19) Europäisches Patentamt
European Patent Office
Office européen des brevets

(11) EP 4 770 104 A1

(12) **EUROPEAN PATENT APPLICATION**
published in accordance with Art. 153(4) EPC

(43) Date of publication:
01.07.2026 Bulletin 2026/27

(51) International Patent Classification (IPC):
H04N 21/44 (2011.01)    H04N 21/439 (2011.01)
G06T 9/00 (2006.01)

(21) Application number: 24881208.3

(22) Date of filing: 16.08.2024

(86) International application number:
PCT/CN2024/112796

(87) International publication number:
WO 2025/086840 (01.05.2025 Gazette 2025/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.10.2023 CN 202311403638

(71) Applicant: Tencent Technology (Shenzhen)
Company Limited
Shenzhen, Guangdong 518057 (CN)

(72) Inventor: LIN, Chuming
Shenzhen, Guangdong 518057 (CN)

(74) Representative: Gunzelmann, Rainer et al
Wuesthoff & Wuesthoff
Patentanwälte und Rechtsanwalt PartG mbB
Schweigerstraße 2
81541 München (DE)

(54) **IMAGE GENERATION METHOD AND APPARATUS, ELECTRONIC DEVICE, AND STORAGE MEDIUM**

(57) Embodiments of the present application provide an image generation method and apparatus, an electronic device, and a storage medium. The image generation method relates to the field of image generation in the field of image processing. The image generation method comprises: upon acquiring an input image and a reference image, first encoding the input image and the reference image to obtain an input feature of the input image and a reference feature of the reference image; and then decoding the input feature and the reference feature to obtain a final output image. The image generation method can not only improve the image generation performance, but also improve the generalization ability of an image generation process and reduce the complexity and time cost of the image generation process.

200

FIG. 2

**Description**

RELATED APPLICATION

This application claims priority to Chinese Patent Application No. 202311403638.5, filed with the China National Intellectual Property Administration on October 26, 2023 and entitled "IMAGE GENERATION METHOD AND APPARATUS, ELECTRONIC DEVICE, AND STORAGE MEDIUM", which is incorporated herein by reference in its entirety.

TECHNICAL FIELD

Embodiments of this application relate to image generation in the field of image processing, and specifically, to an image generation method and apparatus, an electronic device, and a storage medium.

BACKGROUND

In an intelligent few-shot digital human product, input audio provided by a user may be used to re-drive lip shapes of a target object (for example, a person or an animal) in an input video so that the lip shape match the input audio, thereby obtaining an output video.

In general, before the input audio is used to drive the lip shapes of the target object in the input video, it is necessary to first train an image generation model based on the input video. In a training process, the image generation model uses a rendered image driven by audio of the input video as an input and obtains a high-definition image of the target object, so that the image generation model can learn features required for generating the high-definition image based on the rendered image. In a prediction process, the image generation model uses a rendered image driven by the input audio as an input, and uses a high-definition image of the target object as an output.

However, the image generation model obtained through training by using the input video is not a general-purpose model, which reduces a generalization capability of an image generation process. That is, after the image generation model is trained based on the input video, it can only generate high-definition images from the rendered images for that input video. If a user changes the input video, the image generation model needs to be trained again based on the changed input video.

In addition, during training of the image generation model, the image generation model has a requirement on duration of the input video. Generally, the duration is required to be three minutes or longer, and the input video needs to be a video featuring spoken content. Moreover, during the training of the image generation model, a user needs to wait for half day to one day. This increases complexity and time cost of the image generation process.

SUMMARY

This application provides an image generation method and apparatus, an electronic device, and a storage medium, to improve image generation performance, enhance a generalization capability of an image generation process, and reduce complexity and time cost of the image generation process.

According to a first aspect, an embodiment of this application provides an image generation method, including:

obtaining an input video and an input audio;

obtaining a rendered image matching a facial contour of a target object in the input video;

adjusting, based on an audio unit in the input audio, a lip shape of the target object in the rendered image to match the audio unit so as to obtain an input image;

sampling the input video to obtain an image sequence, and determining, from the image sequence, an image driven by the audio unit;

determining a reference image of the input image based on the image driven by the audio unit;

encoding the input image and the reference image, to obtain an input feature of the input image and a reference feature of the reference image; and

decoding the input feature and the reference feature, to obtain an output image.

According to a second aspect, an embodiment of this application provides an electronic device for performing the method according to the first aspect or implementations of the first aspect. Specifically, the electronic device includes a functional module configured to perform the method according to the first aspect or implementations of the first aspect.

In an implementation, the electronic device may include a processing unit, configured to perform an information processing-related function. For example, the processing unit may be a processor.

In an implementation, the electronic device may include a transmitting unit and/or a receiving unit. The transmitting unit is configured to perform a transmitting-related function, and the receiving unit is configured to perform a receiving-related function. For example, the transmitting unit may be a transmitter or a transmitter device, and the receiving unit may be a receiver or a receiver device. For another example, the electronic device is a communication chip, the receiving unit may be an input circuit or interface of the communication chip, and the transmitting unit may be an output circuit or interface of the communication chip.

According to a third aspect, this application provides an electronic device, including a processor and a memory. The memory is configured to store a computer program. The processor is configured to invoke and run the computer program stored in the memory, to perform the method according to the first aspect or implementations of the first aspect.

In an implementation, there are one or more processors, and there are one or more memories.

In an implementation, the memory may be integrated with the processor, or the memory may be disposed separately from the processor.

In an implementation, the electronic device further includes a transmitter (transmitter device) and a receiver (receiver device).

According to a fourth aspect, an embodiment of this application provides a computer-readable storage medium, configured to store a computer program. The computer program causes a computer to perform the method in the first aspect.

According to a fifth aspect, an embodiment of this application provides a computer program product, including a computer program/instructions. The computer program/instructions, when executed by a processor, implement the method according to the first aspect.

According to a sixth aspect, an embodiment of this application provides a computer program. The computer program, when run on a computer, causes the computer to perform the method according to any one of the first aspect, the second aspect, or implementations of the first aspect and the second aspect.

Based on the foregoing technical solutions, in embodiments of this application, after the input image and the reference image are obtained based on the input video and the input audio, the input image and the reference image may be first encoded, to obtain the input feature of the input image and the reference feature of the reference image, and then the input feature and the reference feature are decoded, to obtain the final output image.

The reference image is used, and the input feature and the reference feature are decoded together in a decoding process, so that the output image obtained through decoding have both the input feature and the reference feature. Furthermore, the reference feature is a feature obtained by encoding the reference image, and the reference image is an image determined based on an image driven by the audio unit in the image sequence obtained by sampling the input video. Therefore, even if the input video is not used for training of encoding and decoding processes, the reference feature can still enables the output image to have the feature of the image driven by the audio unit. In other words, in the image generation process, the feature of the image driven by the audio unit may be directly used as a feature required for generating the output image based on the input image, so that the performance of generating the output image can be improved.

In addition, the feature of the image driven by the audio unit is directly used as the feature required for generating the output image based on the input image. In this way, training of encoding and decoding processes by using the input video can be avoided, and no requirement is imposed on duration of the input video. An output image can be generated from a rendered image even for one single image, so that a generalization capability of the image generation process is improved, and dependency of the image generation process on the input video and a training waiting time are eliminated, thereby reducing complexity and time cost of the image generation process.

In conclusion, this application provides an image generation method and apparatus, an electronic device, and a storage medium, to improve image generation performance, enhance a generalization capability of an image generation process, and reduce complexity and time cost of the image generation process.

BRIEF DESCRIPTION OF THE DRAWINGS

FIG. 1 shows an example of a system framework according to an embodiment of this application.

FIG. 2 is a schematic flowchart of an image generation method according to an embodiment of this application.

FIG. 3 shows an example of a process of generating an output image based on an audio-driven rendered image according to an embodiment of this application.

FIG. 4 shows an example of a structure of a first encoder according to an embodiment of this application.

FIG. 5 shows an example of a structure of a first self-attention block according to an embodiment of this application.

FIG. 6 is another schematic flowchart of an image generation method according to an embodiment of this application.

FIG. 7 shows an example of a structure of a decoder according to an embodiment of this application.

FIG. 8 shows an example of a structure of a first cross-attention block according to an embodiment of this application.

FIG. 9 is a schematic block diagram of an image generation apparatus according to an embodiment of this application.

FIG. 10 is a schematic block diagram of an electronic device according to an embodiment of this application.

DETAILED DESCRIPTION

The technical solutions in embodiments of this application are clearly and completely described below with reference to the accompanying drawings in embodiments of this application. Apparently, the described embodiments are merely some rather than all of embodiments of this application. All other embodiments obtained by a person of ordinary skill in the art based on embodiments of this application without creative efforts shall fall within the protection scope of this application.

Solutions provided in this application may relate to artificial intelligence technologies, and more specifically, to a computer vision (CV) technology and a machine learning (ML) technology among the artificial intelligence technologies.

To better understand the technical solutions provided in this application, terms involved in embodiments of this application are described below.

A feature refers to information that is extracted from data and that is useful for result prediction, and may be text or data.

Feature engineering refers to a process of converting raw data into features that better capture the essence of a problem, so that when these features are applied to a predictive model, the model achieves higher accuracy on unseen data. In short, features having a significant influence on dependent variable y are referred to as independent variables x. An objective of the feature engineering is to find these features. Good features possess greater flexibility, allow training with simple models, and yield excellent results. A purpose of the feature engineering is to select better features, to obtain better training data. The feature engineering is vital to the success of machine learning. Much of the success of machine learning is actually success in engineering features that a learner can understand.

Certainly, a specific form of the raw data is not limited in this embodiment of this application. As an example, the raw data may be constructed as tubular data, to obtain an eigenmatrix. Based on this, feature extraction may be performed through principal component analysis (PCA), to create a new feature for representing audio.

The feature engineering may include modules such as feature extraction, feature construction, and feature selection modules.

Feature extraction means to transform raw data into a set of features that have clear physical meaning, statistical significance, or kernel-based characteristics. An object of the feature extraction is raw data, that is, original features, which is used to construct new features, that is, transform the raw data into a set of features having clear physical meaning or statistical significance.

Feature construction means to manually construct a new feature based on raw data. Specifically, a potential form and data structure of a new feature may be determined from the perspective of a prediction target by using a real data sample, so that the new feature can be better applied to a predictive model. Feature construction relates to extracting features with physical meaning from raw data, and therefore requires strong insight and analysis capabilities. Assuming that the raw data is tubular data, new features may be created by using mixed attributes or combined attributes, or by decomposing or splitting original features.

Feature selection means to select a subset of features having statistical significance from a feature set, to reduce dimensionality. During feature selection, features may be ranked by importance, and then features may be selected based on a feature ranking result. It is assumed that there is a piece of standard tubular data, each row (that is, a category item) of the tubular data represents one piece of observation sample data, and each column (a feature item) of the tubular data represents a feature. Among these features, some carry rich information, and some carry little information. A feature carrying little information is irrelevant data. Feature importance may be measured based on a correlation (feature importance) between a feature item and a category item, and feature selection is then performed based on a feature ranking result.

A derived feature refers to a new feature obtained from raw data through feature learning. The derived features usually appear for two reasons: Changes of the data itself lead to emergence of many features not originally present in the data. During feature learning, an algorithm generates derived features based on relationships between features. Sometimes, the derived features can better reflect relationships between data features. The derived features also require machine learning and deep learning algorithms to have stronger learning capabilities, that is, incremental learning, online learning, and transfer learning. In the field of computer science, a derived feature refers to a new feature obtained from raw data through feature learning. In machine learning, derived features may be generated due to various reasons: Data has a time attribute and strong temporal characteristics. Data has dynamic and disordered nature, unbounded size, and burstiness. For feature transformation, data features are classified into continuous features and categorical features. The categorical features are also referred to as discrete features. Different types of data are processed using different methods. For example, for the continuous features, normalization is a common method for processing continuous data features, to find an optimal solution more efficiently through gradient descent. Feature standard normalization may be broadly divided into linear normalization and non-linear normalization.

Specific processes in feature engineering are not limited in this embodiment of this application. As an example, a process in feature engineering includes, but is not limited to, binning, one-hot encoding, hashing trick, embedding, log transformation, feature scaling, normalization, or feature interaction. Certainly, another process or operation may be further included. This is not limited in this application.

In addition, a model used by the encoder, a model used by the decoder, and the tooth matching model in this embodiment of this application are not specifically limited.

As an example, the predictive model or classification model includes, but is not limited to, a conventional learning model, an ensemble learning model, or a deep learning model. In some embodiments, the conventional learning model includes, but is not limited to, a tree model (regression tree) or a logistic regression (LR) model. The ensemble learning model includes, but is not limited to, an improved gradient boosting model (XGBoost) or a random forest model. The deep learning model includes, but is not limited to, a long short-term memory (LSTM) network or a neural network.

Terms used in the implementation part of this application are merely used for explaining specific embodiments of this application, but are not intended to limit this application.

For example, the term "and/or" used in this specification merely indicates an association relationship for describing associated objects and represents that three relationships may exist. For example, A and/or B may represent the following three cases: Only A exists, both A and B exist, and only B exists. The term "at least one" merely describes a combination relationship of listed objects, and indicates that one or more of the objects may exist. For example, "at least one of the following: A, B, or C" may cover the following combination cases: only A exists, only B exists, only C exists, both A and B exist, both A and C exist, both B and C exist, and A, B, and C exist. The term "plurality of" means two or more. The character "/" generally indicates an "or" relationship between associated objects.

For another example, the term "corresponding to" may indicate that there is a direct correspondence or an indirect correspondence between the two, or may indicate that there is an association relationship between the two, or may indicate a relationship such as indicating vs. being indicated, or configuring vs being configured. The term "indication" may be a direct indication, or an indirect indication, or may indicate an association relationship. For example, that A indicates B may indicate that A directly indicates B, for example, B may be obtained by using A; or may indicate that A indirectly indicates B, for example, A indicates C, and B may be obtained by using C; or may indicate that A and B have an association relationship. The term "predefine" or "preconfigure" may indicate pre-storing, on the device, corresponding code, table, or other relevant information that can be configured for indication, or may indicate that the corresponding code, table, or other relevant information is agreed on by a protocol. The "protocol" may refer to a standard protocol in the field. The term "when" may be explained as "if", "in a case that", "in response to", or the like. Similarly, depending on the context, the phrase "if determining" or "if detecting (a stated condition or event)" may be explained as "when determining" or "in response to determining" or "when detecting (the stated condition or event)" or "in response to detecting (the stated condition or event)". The terms such as "first", "second", "third", "fourth", "A$^{th}$", and "B$^{th}$" are used for distinguishing different objects but not for describing a specific sequence. The terms "include", "have", and their variants are intended to cover a non-exclusive inclusion. A digital video compression technology is mainly to compress massive digital video data to facilitate transmission, storage, and the like.

The following describes application scenarios, technical problems to be resolved, and inventive concepts of embodiments of this application.

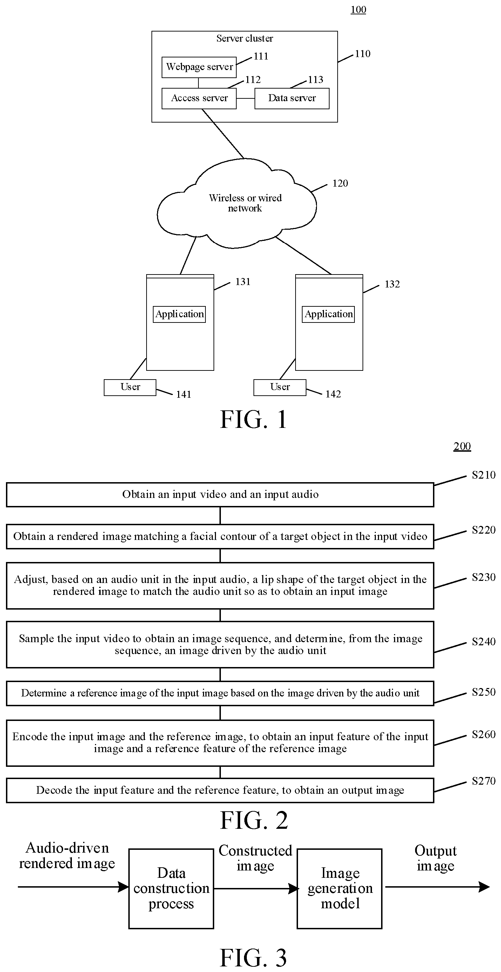

FIG. 1 shows an example of a system framework 100 according to an embodiment of this application.

As shown in FIG. 1, the system framework 100 may be an application system. A specific type of the application is not limited in this embodiment of this application. The system framework 100 includes: a terminal 131, a terminal 132, and a server cluster 110. The terminal 131 and the terminal 132 are connected to the server cluster 110 through a wireless or wired network 120.

The terminal 131 and the terminal 132 may be at least one of smartphones, game consoles, desktop computers, tablet computers, e-book readers, MP4 players, MP4 players, or portable laptop computers. The terminal 131 and the terminal 132 may be clients on which applications are installed and run. The application may be any intelligent few-shot digital human product capable of image generation, for example, may be any one of an online video program, a short video program, an offline video program, an image sharing program, a voice social program, a comics program, a wallpaper program, a news pushing program, a supply and demand information pushing program, an academic exchange program, a technological exchange program, a policy communication program, a program including a comment mechanism, a program including an opinion posting mechanism, or a knowledge sharing program. The terminal 131 and the terminal 132 may be terminals used by a user 141 and a user 142, respectively. Applications run on the terminal 131 and the terminal 132 are logged in with registered accounts.

The server cluster 110 includes at least one of one server, a plurality of servers, a cloud computing platform, or a virtualization center. The server cluster 110 is configured to provide a background service for applications (for example, applications on the terminal 131 and the terminal 132). In some embodiments, the server cluster 110 undertakes main computing work, and the terminal 131 and the terminal 132 undertake secondary computing work; or the server cluster 110 undertakes secondary computing work, and the terminal 131 and the terminal 132 undertake main computing work; or a distributed computing architecture is used for the terminal 131, the terminal 132, and the server cluster 110 for collaborative computing.

Using an example in which the system framework 100 is a web browsing system, the server cluster 110 includes: an access server 112, a web server 111, and a data server 113. There may be one or more access servers 112. The access servers 112 may be deployed nearby in different cities. The access server 112 is configured to receive service requests of the terminal 131 and the terminal 132, and forward the service requests to corresponding servers for handling. The web server 111 is a server configured to provide a web page for the terminal 131 and the terminal 132, and tracing point code is integrated in the web page. The data server 113 is configured to receive data (for example, service data) reported by the terminal 131 and the terminal 132.

FIG. 1 shows an example of a system architecture to which this embodiment of this application is applied. A system architecture available to this embodiment of this application is not limited thereto. For example, the system architecture 100 may include one of the terminal 131 and the terminal 132.

In an actual application, the terminal 131 is used as an example. An intelligent few-shot digital human product in the terminal 131 may transmit an input audio and an input video to the data server 113, and transmit a service request to the access server 112. The service request is configured for requesting to use the input audio received by the data server 113 to re-drive a lip shape of a target object (for example, a person or an animal) in the input video to match the input audio, so as to obtain an output video. The output video is then transmitted to the terminal 113 through the web server 111, so that the terminal 113 may display the output video.

The intelligent few-shot digital human product may be applied to various fields. For example, in the field of short videos, a streamer may use a sales audio clip for selling product B to re-drive a lip shape of the streamer in a sales video clip for selling product A to match a corresponding sales audio, so as to improve working efficiency. For another example, in the field of education, a lecturer may use a lecture audio explaining knowledge point B to re-drive a lecture video explaining knowledge point A and a lip shape of the lecturer to match a corresponding lecture audio, so as to improve working efficiency.

In general, before an input audio is used to drive a lip shape of a target object in an input video, it is necessary to first train an image generation model based on the input video. In a training process, the image generation model uses a rendered image driven by audio of the input video as an input and obtains a high-definition image of the target object, so that the image generation model can learn, based on the rendered image, features required for generating the high-definition image. In a prediction process, the image generation model uses a rendered image driven by the input audio as an input, and uses a high-definition image of the target object as an output.

However, the image generation model obtained through training by using the input video is not a general-purpose model. This lowers a generalization capability of an image generation process. Specifically, after the image generation model is trained based on the input video, it can only generate high-definition images from rendered images for that input video. If a user changes the input video, the image generation model needs to be trained again based on the changed input video.

In addition, during training of the image generation model, the image generation model has a requirement on duration of the input video. Generally, the duration is required to be three minutes or longer, and the input video needs to be a video featuring spoken content. Moreover, during the training of the image generation model, a user needs to wait for half day to one day. This increases complexity and time costs of the image generation process.

In view of this, this application provides an image generation method and apparatus, an electronic device, and a storage medium, to improve image generation performance, enhance a generalization capability of an image generation process, and reduce complexity and time costs of the image generation process.

FIG. 2 is a schematic flowchart of an image generation method 200 according to an embodiment of this application. The image generation method 200 may be performed by any electronic device having a data processing capability. For example, the electronic device may be implemented as the terminal 131 or the terminal 132, the server cluster 110, or the data server 113 in the server cluster 110 shown in FIG. 1. This is not limited in this application. For ease of description, the image generation method 200 is described below using an example in which an image generation apparatus serves as an execution entity.

The image generation method 200 is applicable to a scenario of digital human. For example, the method is applicable to a scenario in which a digital person speaks under driving of text or audio. Specifically, a user provides a video clip of the user (where the user may speak or may keep silent, in other words, the video does not need to include audio information), and the video provided by the user does not need to be trained. Then, the user may provide any speech audio, and the audio may be synthesized from text or recorded from the user. The audio provided by the user is used to re-drive a lip shape and a facial expression of a person in the video, so that a lip shape and an expression of a person in the generated video match the audio newly provided by the user.

As shown in FIG. 2, the image generation method 200 may include the following operations.

S210: Obtain an input video and an input audio.

For example, the image generation apparatus may obtain the input video and the input audio. For example, the input video may be a video including a target object, and the target object may be any object with a mouth. For example, the target object may be a person, an animal, a cartoon character, or even another object, a scene, a building, or the like that has a designed mouth special effect. For example, the input video may be a video including audio or not including audio. That is, the input video may be a video in which the target object speaks, or may be a video in which the target object does not speak. This is not specifically limited in this application.

For example, the input video may be a video file. A format of the video file is not specifically limited in this application. For example, the video file may be in MP4 format. A video in MP4 format has a relatively small file size and a relatively high compression ratio, and is usually configured for video sharing on the Internet and online video streaming media. The video file may be in AVI format. A video in AVI format has high compatibility, and can be played on many different devices and operating systems. The video file may be in MKV format. MKV is an open multimedia container format, may include a plurality of audio, video, and subtitle streams, and is usually configured for storing high-definition videos and Blu-ray movies. The video file may be in MOV format. A video in MOV format has relatively high quality and compatibility. The video file may be in WMV format. A video in WMV format is usually relatively small, has a relatively high compression ratio, and relatively low quality. In addition, there are other formats such as AVCHD, BD, DivX, and VCD. A specific selection may be performed based on a use scenario and a device.

For example, the audio file may be audio generated based on text, or may be original sound recorded by using a sound recording device.

For example, the input audio may be an audio file. A format of the audio file is not limited in this application. For example, the audio file may be a WAVE file. A WAVE file is a digital sound format for recording sound waveforms, and allows acquisition of a high-quality sound file using a high sampling rate, a high sampling precision, and a fast computer. The audio file may be an MOD file. An MOD file is a music file format, is usually configured for storing music and sound effects, and may be used by MOD fans and in some game programs. The audio file may be an RA file. The RA file is an audio flow file format, and is usually configured for transmission of audio information in real time over a low-rate wide area network, for example, in a voice call. There are some other audio file formats, for example, AU, VOC, MPEG-3, and Real Audio. Each format has its unique features and application scenarios, and may be specifically selected based on a use scenario and a device.

S220: Obtain a rendered image matching a facial contour of the target object in the input video.

For example, the image generation apparatus may obtain the rendered image matching the facial contour of the target object in the input video. For example, the rendered image refers to an image obtained by rendering a target object model using rendering software to simulate a facial contour of a target object in the real world. The rendered image usually simulates an illumination effect in the real world by using technologies such as light identification and light energy transmission, to simulate the facial contour of the target object in the real world. In addition, the rendered image may further simulate features such as clothing color and fabric texture of the target object in the real world by using a technology such as color correction or texture mapping.

For example, the rendered image may be an image obtained by rendering the target object model using three-dimensional (3D) rendering software.

S230: Adjust, based on an audio unit in the input audio, a lip shape of the target object in the rendered image to match the audio unit, so as to obtain an input image.

For example, the image generation apparatus adjusts, based on the audio unit in the input audio, the lip shape of the target object in the rendered image to a lip shape matching the audio unit, to obtain the input image. For example, the audio unit may be a phoneme. A phoneme is a smallest phonetic unit. The input audio is a continuous voice stream including a series of phonemes, and may be used to represent speech features of the target object. Phonemes may be used to represent various features in speech, such as frequency, duration, pitch, and sound volume. A phoneme is usually formed by an articulation movement, and different articulation movements produce different phonemes.

For example, the audio unit may be a pronunciation character. The pronunciation character refers to a specific language symbol, which includes a set of phonemes and may be used to represent a specific linguistic meaning.

Certainly, in another alternative embodiment, the audio unit may be a speech unit of another type or in another form. This is not specifically limited in this application.

How the image generation apparatus adjusts the lip shape of the target object in the rendered image to a lip shape matching the audio unit is not specifically limited in this application. For example, the lip shape of the target object in the rendered image may be adjusted to a lip shape matching the audio unit by using various rendering software. Lip shape adjustment of the target object may be implemented by setting a shape and texture of a model in the rendering software.

For example, assuming that the rendered image may be a 3D model of a facial contour of the target object, the image generation apparatus may drive the 3D model based on the input audio, to obtain a 3D rendered image corresponding to a lip shape of the input audio, to obtain the input image.

S240: Sample the input video to obtain an image sequence, and determine, from the image sequence, an image driven by the audio unit.

For example, the image generation apparatus samples the input video to obtain the image sequence, and determines, from the image sequence, the image driven by the audio unit. For example, the image generation apparatus may sample the input video by extracting image frames to obtain the image sequence.

For example, the image generation apparatus determines, from the image sequence based on a predefined determining criterion, the image driven by the audio unit. A specific implementation of the determining criterion is not limited in this application. The determining criterion may be information pre-stored on the image generation apparatus, or information obtained from another device, or may be information input by a user.

S250: Determine a reference image of the input image based on the image driven by the audio unit.

For example, the image generation apparatus determines the reference image of the input image based on the image driven by the audio unit. For example, the image generation apparatus may directly determine, as the reference image, the image driven by the audio unit, or may process the image driven by the audio unit and determine a processed image as the reference image, or may even determine the reference image from the image sequence based on the image driven by the audio unit. This is not specifically limited in this application.

S260: Encode the input image and the reference image, to obtain an input feature of the input image and a reference feature of the reference image.

For example, the image generation apparatus encodes the input image and the reference image, to obtain the input feature of the input image and the reference feature of the reference image. For example, the image generation apparatus may perform processing such as feature extraction, feature construction, and feature selection on the input image and the reference image, to encode the input image and the reference image and obtain the input feature and the reference feature. The processing such as feature extraction, feature construction, and feature selection may be performed by using related technical means in feature engineering or neural networks. This is not specifically limited in this application.

For example, the image generation apparatus may encode the input image and the reference image by using an encoder, and before encoding, may pre-train an encoding process of the encoder by using a large amount of data, and further encode the input image and the reference image by using a trained encoder, to obtain the output feature and the reference feature.

After training is performed based on a large amount of training data, for a new input video, the encoder does not need to be trained again, and the input image and the reference image may be directly encoded, to obtain the output feature and the reference feature.

S270: Decode the input feature and the reference feature, to obtain an output image.

For example, the image generation apparatus decodes the input feature and the reference feature, to obtain the output image. For example, the image generation apparatus may decode the input feature and the reference feature by using a decoder, and before decoding, may pre-train a decoding process of the decoder by using a large amount of data, and further decode the input image and the reference image by using a trained decoder, to obtain the output image.

After training is performed based on a large amount of training data, for a new input video, decoding may be directly performed based on the input feature and the reference feature to obtain the output image, without needing to train the decoding process again. In addition, the encoder involved in operation S260 and the decoder involved in operation S270 may be jointly trained, or may be separately trained. This is not specifically limited in this application.

In this embodiment, the input image is an image obtained by adjusting the lip shape of the target object in the rendered image to a lip matching the audio unit, the reference image is an image determined based on an image driven by the audio unit, and the image driven by the audio unit is an image selected from the image sequence. In view of this, the decoding process involved in this embodiment may be understood as a process in which the image generation apparatus adjusts the lip shape of the target object in the reference feature based on the input feature to obtain the output image, and makes the lip shape of the target object in the output image to match the audio unit.

In this embodiment, after obtaining the input image and the reference image, the image generation apparatus may first encode the input image and the reference image to obtain the input feature of the input image and the reference feature of the reference image, and then decode the input feature and the reference feature to obtain a final output image.

The reference image is introduced, and the input feature and the reference feature are decoded together in a decoding process, so that the output image obtained through decoding have both the input feature and the reference feature. Furthermore, the reference feature is a feature obtained by encoding the reference image, and the reference image is an image determined based on an image driven by the audio unit in the image sequence obtained by sampling the input video. Therefore, even if the input video is not used for training of encoding and decoding processes, the reference feature can still enable the output image to have the feature of the image driven by the audio unit. In other words, in the image generation process, the feature of the image driven by the audio unit may be directly used as a feature required for generating the output image based on the input image, so that the performance of generating the output image can be improved.

In addition, the feature of the image driven by the audio unit is directly used as the feature required for generating the output image based on the input image. In this way, training of encoding and decoding processes by using the input video is not needed, and no requirement is imposed on duration of the input video. An output image can be generated from a rendered image even for one single image, so that a generalization capability of the image generation process is improved, and dependency of the image generation process on the input video and a training waiting time are eliminated, thereby reducing complexity and time cost of the image generation process.

In conclusion, this application provides an image generation method and apparatus, an electronic device, and a storage medium, to improve image generation performance, enhance a generalization capability of an image generation process, and reduce complexity and time cost of the image generation process.

When the image generation apparatus encodes only the input image to obtain the input feature, and then directly decodes the input feature to obtain the output image, the encoding and decoding processes of the image generation apparatus may be implemented by using an image generation model.

However, because the image generation model needs to learn features required for generating a high-definition image based on the rendered image, before the image generation model is used to generate the output image based on the input image, the image generation model needs to be trained by using the input video. Specifically, the image generation model needs to use the audio-driven rendered image of the input video as an input to obtain a high-definition image of the target object. Therefore, in a prediction process, the image generation model may use the input image as an input to obtain the output image, and output the output image.

FIG. 3 shows an example of a process of generating an output image based on an audio-driven rendered image according to an embodiment of this application.

As shown in FIG. 3, after the audio-driven rendered image is obtained, a data construction process needs to be first performed on the audio-driven rendered image, to obtain a constructed image, and the constructed image is then used as an input to output the output image by using the image generation model. The reason for this is that it is very difficult to generate a realistic high-definition portrait directly from an audio-driven rendered image. Therefore, part of information of an original image (for example, the reference image) may be used to assist in image generation.

For example, in a data construction process, a target region in an audio-driven rendered image may be identified by using a face key-point technology first, and the target region may include regions of a nose and both cheeks of a person (for example, there are 256 key points, and a region below a line connecting three points indexed as 83, 177, and 211, is considered as a lower face part), and then a corresponding region in the original image is replaced with the target region, to obtain a constructed image. The target region may not completely cover the cheeks and neck of the person in the original image. In other words, part of the neck and cheek regions of the person in the original image may be exposed, which may interfere with learning of the image generation model. Therefore, a dilation operation may be performed. The dilation operation is a basic operation in morphological processing, and can expand a corresponding region in the original image to form an enclosed black border to mask the original cheek and neck regions. In this way, when the constructed image obtained is used as an input image of the image generation model, a result generated by the image generation model is not affected by the cheeks and the neck when the target object in the input video speaks, thereby improving effect stability.

In view of this, the image generation model performs training fitting on only a single video. If the video is changed, even for a different video of a same person, reasoning cannot be performed using the image generation model due to different background, and the image generation model needs to be re-trained by using the new video as training data.

However, in this embodiment, in the image generation process, the feature of the image driven by the audio unit may be directly used as the feature required for generating the output image based on the input image, so that the performance of generating the output image can be improved. In this way, retraining of the encoding and decoding processes based on an input video is avoided.

In this embodiment of this application, in operation S230, the image generation apparatus may directly determine as the input image an image obtained after the lip shape of the target object in the rendered image is adjusted, based on the audio unit, to the lip shape matching the audio unit, or may use as the audio-driven rendered image shown in FIG. 3 an image obtained after the lip shape of the target object in the rendered image is adjusted, based on the audio unit, to the lip shape matching the audio unit, perform the data construction process shown in FIG. 3 on the audio-driven rendered image, and then use the obtained constructed image as the input image. This is not specifically limited in this application.

In some embodiments, S240 may include:

determining, in a case that a quantity of images in the image sequence is equal to a quantity of units included in the input audio, an image, whose sampling sequence number is the same as a position sequence number the audio unit in the input audio, in the image sequence as the image driven by the audio unit.

For example, in a case that the quantity of images in the image sequence is equal to the quantity of units included in the input audio, the image generation apparatus determines the image, whose sampling sequence number is the same as the position sequence number of the audio unit in the input audio, in the image sequence as the image driven by the audio unit. Further, in a case that the quantity of images in the image sequence is greater than the quantity of units included in the input audio, first, the image sequence is downsampled first to obtain a downsampling sequence, and then an image, whose sampling sequence number is the same as the position sequence number of the audio unit in the input audio, in the downsampling sequence is determined as the image driven by the audio unit. A quantity of images in the downsampling sequence is equal to the quantity of units included in the input audio. When the quantity of images in the image sequence is less than the quantity of units included in the input audio, the image sequence is upsampled first to obtain an upsampling sequence, and then the image generation apparatus determines an image, whose sampling sequence number is the same as the position sequence number of the audio unit in the input audio, in the upsampling sequence as the image driven by the audio unit. A quantity of images in the upsampling sequence is equal to the quantity of units included in the input audio.

In this embodiment, an image, whose sampling sequence number is the same as the position sequence number of the audio unit in the input audio, in the image sequence is determined as the image driven by the audio unit, to ensure that frames of a video formed by the output image and frames of the input video can keep synchronous, thereby improving a visual effect of the video formed by the output image.

Certainly, a sampling sequence number of an image in the image sequence is similar to a time stamp of the image. In other words, the determining of the image driven by the audio unit is merely a specific example of the image generation apparatus determining, based on the sequence number (that is, the time stamp) of the image in the image sequence, the image driven by the audio unit, and is not to be construed as a limitation to this application.

For example, during the image generation apparatus determining, from the image sequence, the image driven by the audio unit, in an implementation, the image generation apparatus may select, as needed, an image that best satisfies a condition or a requirement from the image sequence as the image driven by the audio unit. For example, an image in which a movement amplitude of the target object is smaller than that in a baseline image is selected as an image that best satisfy the condition or requirement. In another implementation, the image generation apparatus may perform selection based on attributes of images in the image sequence. For example, selection may be performed based on a feature such as a color, a shape, or texture of the image. In other words, an image satisfying a preset attribute in the image sequence is used as an image driven by the audio unit. In another implementation, the image generation apparatus may perform selection based on a size and a proportion of the target object in each image in the image sequence. For example, in the image sequence, an image in which a size of a target object is greater than a preset size may be selected as the image driven by the audio unit. In another implementation, the image generation apparatus may perform selection based on time stamps or the like of images in the image sequence. For example, an image whose time stamp matches the audio unit may be selected as the image driven by the audio unit. In another implementation, the image generation apparatus may perform selection based on quality of the images in the image sequence. For example, an image whose parameter for representing clarity and quality is greater than a preset threshold may be selected as the image driven by the audio unit. In conclusion, the image generation apparatus may determine, from the image sequence based on a specific requirement and purpose, the image driven by the audio unit.

In some embodiments, "the image driven by the audio unit" refers to an image selected from the image sequence based on the position index of the audio unit (i.e., selection is driven by the position index of the audio unit), where the sampling sequence number of the selected image is aligned with the position index of the audio unit on the time axis.

In some embodiments, "the image driven by the audio unit" can be understood in the context of dynamic real-time selection: as audio units are continuously input in chronological order, for each audio unit, the corresponding image frame is dynamically selected from the image sequence according to the position index of the audio unit, where the sampling sequence number of the selected image is aligned with the position index of the audio unit on the time axis. The series of sequentially selected image frames forms a new video sequence (e.g., there may be "changes" between adjacent video frames) that is synchronized with the audio playback. In this sense, the appearance of each selected image is "driven" by its corresponding audio unit.

In some embodiments, S250 may include:

determining, as the reference image, the image driven by the audio unit.

For example, the image generation apparatus determines as the reference image the image driven by the audio unit. In this embodiment, the image driven by the audio unit is determined as the reference image, to ensure that frames of a video formed by the output image and frames of the input video can keep synchronous, thereby improving a visual effect of the video formed by the output image. In other words, when the image generation apparatus generates the output image based on the input image and forms or generates the output video based on the output image, the feature of the reference image can be aligned as closely as possible with a feature required for synchronization between frames of the output video and input video, thereby improving a visual effect of the output video.

In some embodiments, S250 may include:

selecting, from the image sequence according to a sampling time sequence, a plurality of images preceding and following the image driven by the audio unit; and then selecting the reference image from the plurality of images.

For example, the image generation apparatus first selects, from the image sequence according to a sampling time sequence, the plurality of images preceding and following the image driven by the audio unit, and then selects the reference image from the plurality of images.

For example, the plurality of images may include the image driven by the audio unit, or may not include the image driven by the audio unit.

For example, a quantity of the plurality of images may be a preset value, and the preset value may be information pre-stored in the image generation apparatus, or information agreed on in a protocol, or information input by a user.

For example, when the image generation apparatus determines the reference image from the plurality of images, in an implementation, the image generation apparatus may select, as needed, an image that best satisfies a condition or requirement from the plurality of images as the reference image. For example, an image in which a movement amplitude of the target object is smaller than that in a baseline image is selected as an image that best satisfy the condition or requirement. In another implementation, the image generation apparatus may perform selection based on attributes of the plurality of images. For example, selection may be performed based on a feature such as a color, a shape, or texture of the image. That is, an image satisfying a preset attribute among the plurality of images is used as the reference image. In another implementation, the image generation apparatus may perform selection based on a size and a proportion of the target object in each of the plurality of images. For example, an image in which the size of the target object is greater than a preset size among the plurality of images may be selected as the reference image. In another implementation, the image generation apparatus may perform selection based on time stamps or the like of the plurality of images. For example, an image whose time stamp matches the audio unit may be selected as the reference image. In another implementation, the image generation apparatus may perform selection based on quality of the plurality of images. For example, an image whose parameter for representing clarity and quality is greater than a preset threshold may be selected as the reference image. In conclusion, the image generation apparatus may determine the reference image from the plurality of images based on a specific requirement and purpose.

In this embodiment, the image generation apparatus first selects, from the image sequence according to a sampling time sequence, a plurality of images preceding and following the image driven by the audio unit, and then selects the reference image from the plurality of images, so that the image generation apparatus can determine the reference image from the plurality of images based on a specific requirement and purpose. In this way, the output image can satisfy various requirements or purposes, and the flexibility of the output image is increased.

In some embodiments, the input image is encoded by using a first encoder, and the first encoder includes a residual block, a downsampling layer, and a first self-attention block. S260 may include:

The image generation apparatus first performs feature extraction on the input image by using the residual block, to obtain a first encoded feature; next, downsamples the first encoded feature by using the downsampling layer, to obtain a second encoded feature; determines, based on the second encoded feature, a third encoded feature inputted to the first self-attention block; determines a Q value, K value, and V value of the first self-attention block based on the third encoded feature; determines, based on the Q value, K value, and V value of the first self-attention block, a fourth encoded feature outputted by the first self-attention block; and determines the input feature based on the fourth encoded feature.

For example, a residual block is a basic unit in a neural network. Use of a skip connection can effectively pass gradients, to mitigate problems of gradient disappearance and gradient explosion, and improving a training effect of the network. The residual block is usually formed by two or more convolutional layers. Each convolutional layer uses an appropriate convolution kernel to perform a convolution operation on an input, and performs nonlinear transformation by using an activation function. A skip connection is added between convolutional layers, to directly add an input of the layer to an output. The skip connection may involve a simple element-level addition operation, or may involve performing a convolution operation on the input before addition. Finally, activation function transformation is performed on a result obtained through the addition, to obtain an output of the residual block.

For example, a downsampling layer in a convolutional neural network is also referred to as a pooling layer. A specific operation of the downsampling layer is basically the same as an operation of a convolutional layer. To be specific, an image within an s*s window of a to-be-sampled image is processed into a pixel, and a value of the pixel is an average value of all pixels within the window. However, the downsampling layer is not modified through backpropagation. An operation on the pooling layer may also be considered as a special convolution operation. A set step corresponds to a distance. During a convolution operation, it is generally considered that in a picture, a correlation between parts that are close to each other is relatively high, and a correlation between parts that are far from each other is relatively low.

For example, when determining, based on the second encoded feature, the third encoded feature inputted to the first self-attention block, the image generation apparatus may directly determine the second encoded feature as the third encoded feature, or may process the second encoded feature to obtain the third encoded feature. For example, the image generation apparatus may perform processing such as feature extraction, feature construction, and feature selection on the second encoded feature, to obtain the third encoded feature. The processing such as feature extraction, feature construction, and feature selection may be performed by using related technical means in feature engineering or neural networks. This is not specifically limited in this application. For example, the image generation apparatus may use a residual block to perform feature extraction on the second encoded feature, use a downsampling layer to downsample a feature obtained through feature extraction, next, use a residual block to perform feature extraction again on a feature obtained through downsampling, and determine a feature obtained through feature extraction as the third encoded feature.

For example, when determining the Q value, K value, and V value of the first self-attention block based on the third encoded feature, and determining, based on the Q value, K value, and V value of the first self-attention block, the fourth encoded feature outputted by the first self-attention block, the image generation apparatus may use the first self-attention block to perform a multiplication operation on the third encoded feature and a weight of the Q value of the first self-attention block, to obtain the Q value of the first self-attention block, similarly, perform a multiplication operation on the third encoded feature and a weight of the K value of the first self-attention block to obtain the K value of the first self-attention block, and then perform a multiplication operation on the Q value of the first self-attention block and a transpose of the K value of the first self-attention block, to obtain a self-attention map. Next, the image generation apparatus may use the first self-attention block to perform a multiplication operation on the third encoded feature and a weight of the V value of the first self-attention block, to obtain the V value of the first self-attention block, and then perform a multiplication operation on the V value of the first self-attention block and the self-attention map, to obtain the fourth encoded feature outputted by the first self-attention block.

For example, when determining the input feature based on the fourth encoded feature, the image generation apparatus may directly determine the fourth encoded feature as the input feature, or may perform feature processing on the fourth encoded feature to obtain the input feature. For example, the image generation apparatus may perform processing such as feature extraction, feature construction, and feature selection on the fourth encoded feature, to obtain the input feature. The processing such as feature extraction, feature construction, and feature selection may be performed by using related technical means in feature engineering or neural networks. This is not specifically limited in this application. For example, the image generation apparatus may use a residual block to perform feature extraction on the fourth encoded feature, and determine a feature obtained through feature extraction as the input feature.

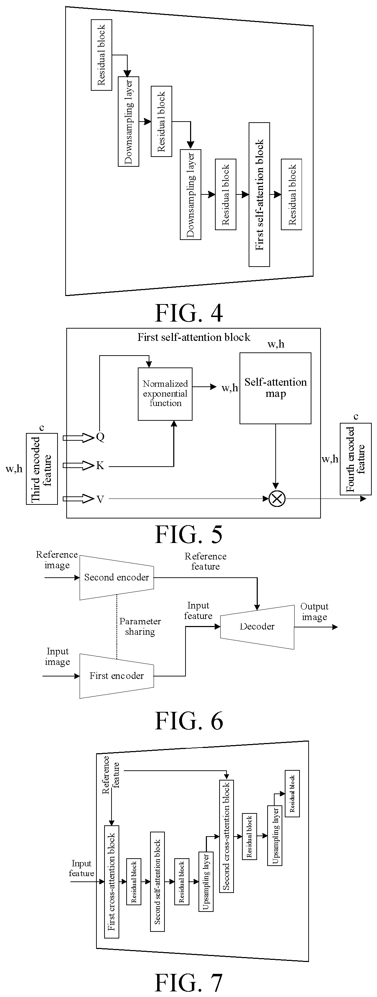

FIG. 4 shows an example of a structure of a first encoder according to an embodiment of this application.

As shown in FIG. 4, the first encoder may include four residual blocks, two downsampling layers, and a first self-attention block.

During actual processing, the image generation apparatus first use a residual block to perform feature extraction on the input image, to obtain the first encoded feature, and then use a downsampling layer to downsample the first encoded feature, to obtain the second encoded feature. Next, the image generation apparatus may use a residual block to perform feature extraction on the second encoded feature, use a downsampling layer to downsample a feature obtained through feature extraction, then use a residual block to perform feature extraction again on a feature obtained through downsampling, and determine a feature obtained through feature extraction as the third encoded feature. Then, the image generation apparatus uses the first self-attention block to perform self-attention processing on the third encoded feature, to obtain the fourth encoded feature. Finally, the image generation apparatus may use a residual block to perform feature extraction on the fourth encoded feature, and determine a feature obtained through feature extraction as the input feature.

FIG. 5 shows an example of a structure of a first self-attention block according to an embodiment of this application.

As shown in FIG. 5, the image generation apparatus determines a Q value, K value, and V value of the first self-attention block based on the third encoded feature, determines the self-attention map based on the Q value and K value of the first self-attention block by using a normalized exponential function, and then performs a multiplication operation on the V value of the first self-attention block and the self-attention map, to obtain the fourth encoded feature outputted by the first self-attention block. Specifically, the image generation apparatus may use the first self-attention block to perform multiplication operation on the third encoded feature and the weight of the Q value of the first self-attention block, to obtain the Q value of the first self-attention block, similarly, perform a multiplication operation on the third encoded feature and the weight of the K value of the first self-attention block, to obtain the K value of the first self-attention block, and then perform a multiplication operation on the Q value of the first self-attention block and a transpose of the K value of the first self-attention block, to obtain the self-attention map. Next, the image generation apparatus may use the first self-attention block to perform a multiplication operation on the third encoded feature and a weight of the V value of the first self-attention block, to obtain the V value of the first self-attention block, and then perform a multiplication operation on the V value of the first self-attention block and the self-attention map, to obtain the fourth encoded feature outputted by the first self-attention block.

FIG. 4 shows merely an example of the first encoder provided in this application, and FIG. 5 shows merely an example of the first self-attention block provided in this application. These examples are not to be construed as limitations to this application. For example, in another alternative embodiment, the second encoded feature may be directly determined as the third encoded feature. To be specific, the residual block and the downsampling layer between the 1st downsampling layer from left to right and the first self-attention block in the first encoder may be omitted. For another example, a new residual block or another module may be added.

Certainly, in another alternative embodiment, the image generation apparatus may alternatively determine the Q value, K value, and V value of the first self-attention block (or another self-attention block and cross-attention block that are described below) in another manner. This is not specifically limited in this application. For example, an example in which the Q value of the first self-attention block is determined based on the third encoded feature is used. In another alternative embodiment, the third encoded feature may be first preprocessed, and then the Q value of the first self-attention block is determined based on a feature obtained through preprocessing.

In an attention mechanism, Q represents query, K represents key, and V represents value.

Query (Q) indicates a current input or content that needs attention, and is configured for providing guidance for an attention degree for a key-value pair. In this embodiment, a multiplication operation may be directly performed on the third encoded feature and the weight of the Q value of the first self-attention block, to obtain the Q value of the first self-attention block.

Key (K) indicates a query-related feature or attribute. In this embodiment, a multiplication operation may be directly performed on the third encoded feature and the weight of the K value of the first self-attention block, to obtain the K value of the first self-attention block.

Value (V) indicates content or information that needs attention. In this embodiment, a multiplication operation may be directly performed on the third encoded feature and the weight of the V value of the first self-attention block, to obtain the V value of the first self-attention block.

The first self-attention block is used as an example. After the Q value, K value, and V value of the first self-attention block are obtained, the Q value is compared with the K value, and the self-attention map may be obtained through calculation. The self-attention map may be configured for representing an attention degree of the V value or measuring importance of the V value. An attention map in the attention mechanism may be calculated by using a dot product or another similarity measure (for example, a Euclidean distance or a cosine similarity). An output of the attention mechanism may be calculated by performing a multiplication operation on the calculated attention map and a V value. In this embodiment, a multiplication operation may be performed on the Q value of the first self-attention block and the transpose of the K value of the first self-attention block, to obtain the self-attention map, and then a multiplication operation map be performed on the V value of the first self-attention block and the self-attention map, to obtain the fourth encoded feature outputted by the first self-attention block.

In some embodiments, the reference image is encoded by using a second encoder. Structures of the first encoder and the second encoder are the same, and the first encoder and the second encoder share parameters with each other.

For example, that structures of the first encoder and the second encoder are the same may be understood as that a layer (and/or a block) included in the first encoder is the same as a layer (and/or a block) included in the second encoder, and a connection relationship between layers (and/or blocks) in the first encoder is the same as a connection relationship between layers (and/or blocks) in the second encoder.

For example, that the first encoder and the second encoder share parameters with each other may be understood as that a parameter type of a layer (and/or a block) included in the first encoder is the same as a parameter type of a layer (and/or a block) included in the second encoder, and a parameter value of the layer (and/or the block) included in the first encoder is the same as a parameter value of the layer (and/or the block) included in the second encoder.

FIG. 6 is another schematic flowchart of an image generation method according to an embodiment of this application.

As shown in FIG. 6, the image generation apparatus may encode an input image by using a first encoder, to obtain an input feature and encode a reference image by using a second encoder, to obtain a reference feature; and then decode the input feature and the reference feature by using a decoder to obtain an output image, and output the output image.

The first encoder and the second encoder have a same structure, and share parameters with each other. Sharing parameters can reduce a quantity of parameters, to accelerate inference, and ensure that distributions of the input feature and reference feature are basically consistent. Certainly, in another alternative embodiment, the first encoder and the second encoder may not share parameters.

The first encoder, the second encoder, and the decoder may be collectively referred to as an image generation model. An input of the image generation model is an input image and a reference image, and an output of the image generation model is an input image.

For the input image, the input image may be a rendered image, or may be an image constructed based on a rendered image. For example, the input image may be an image inputted or outputted based on the data construction process shown in FIG. 3.

For the reference image, during training, a frame preceding or following a specific frame of an input video is randomly extracted as the reference image. For example, in a current training iteration, if the 100th frame of a video is used as an input image to train the image generation model, a frame may be randomly selected as the reference image from the 50th frame to the 150th frame. Certainly, this range may be changed. During testing, a driven image is selected as the reference image. For example, the 100th frame of a test video is driven, and in this case, the current 100th frame is selected as the reference image.

For the image generation model, a training video and the test video are different for the image generation model. The training video includes another person and various backgrounds. During testing, the person and the background are actually unknown. Therefore, the reference image is needed to provide supplementary facial details of the person and background information.

For example, a training loss $l$ of the image generation model is defined as follows:

$$l_{pix} = \|x^r - x^h\|^1 \qquad (1)$$

$$l_{mouth} = \left\|x^r_{mouth} - x^h_{mouth}\right\|^1 \qquad (2)$$

$$l_{per} = \|\phi(x^r) - \phi(x^h)\|^1 \qquad (3)$$

$$l_{adv} = \mathbb{E}_{x^r}[\log D(x^h) + \log(1 - D(x^r))] \qquad (4)$$

$$l = l_{pix} + l_{mouth} + l_{per} + l_{adv} \qquad (5)$$

$x^r$ is an image outputted by the image generation model; $x^h$ is a real image (label) for training; $x^r_{mouth}$ represents a mouth region corresponding to the image outputted by the image generation model; and $x^h_{mouth}$ represents a mouth region corresponding to the real image. Therefore, $l_{mouth}$ is a loss of pixel-level enhancement performed on the mouth. $\phi$ is a visual geometry group (VGG) network, configured to extract a depth feature of an image. $l_{adv}$ is a loss of a generative adversarial network, and D is a discriminator. A specific type of the discriminator (which may also be referred to as a discrimination network) is not limited in this application. The discriminator may be of various types, for example, a common VGG network structure or a patch GAN structure. The VGG network is a classic convolutional neural network. The VGG network has a very consistent structure design, with a core design of using a 3*3 convolution kernel and a 2*2 maximum pooling operation. For example, a VGG16 network includes 13 convolutional layers and three fully-connected layers, and a VGG19 network includes 16 convolutional layers and three fully-connected layers. VGG16 and VGG19 networks are not substantially different, and are different only in network depth. In general, the VGG network is a convolutional neural network structure with scalability in depth and scope, and is characterized by using a small convolution kernel and step and a fixed pooling layer to form basic units of the network, so that training of the network is easier, and the network has a stronger feature extraction capability. A generative adversarial network (GAN) is a deep learning model, and is configured to generate new data similar to real data. The GAN includes two parts: a generator and a discriminator. A task of the generator is to generate data that is as realistic as possible. As for the discriminator, a task of the discriminator is to distinguish as accurately as possible between data generated by the generator and real data. The two parts are trained in an adversarial manner in a training process, hence the name "generative adversarial network". During training of the GAN, the generator and the discriminator are alternately trained. First, the discriminator is trained by using real data and data generated by the generator, to improve a capability of the discriminator to distinguish between the real data and the generated data. Then, the generator adjusts a manner of generating data by the generator based on (output fed back from) the discriminator, to fool the discriminator as much as possible. This process is repeatedly performed until a specific effect is achieved.

Certainly, FIG. 6 shows merely an example in this application, and is not to be construed as a limitation to this application.

For example, in another alternative embodiment, structures of the first encoder and the second encoder may be different, or the first encoder and the second encoder may not share parameters with each other. This is not specifically limited in this application.

In some embodiments, the input feature and the reference feature are decoded by using a decoder; the decoder includes a first cross-attention block, a residual block, a second self-attention block, and an upsampling layer; and S270 may include:

The image generation apparatus determines a Q value of the first cross-attention block based on the input feature, determines a K value and V value of the first cross-attention block based on the reference feature, and determines a first decoded feature based on the Q value, K value, and V value of the first cross-attention block; next, determines, based on the first decoded feature, a second decoded feature inputted to the second self-attention block; determines a Q value, K value, and V value of the second self-attention block based on the second decoded feature, and determines, based on the Q value, K value, and V value of the second self-attention block, a third decoded feature outputted by the second self-attention block; determines, based on the third decoded feature, a fourth decoded feature configured for upsampling; upsamples the fourth decoded feature to obtain a fifth decoded feature; and determines the output image based on the fifth decoded feature.

For example, when determining the Q value of the first cross-attention block based on the input feature, determining the K value and V value of the first cross-attention block based on the reference feature, and determining the first decoded feature based on the Q value, K value, and V value of the first cross-attention block, the image generation apparatus may use the first cross-attention block to perform a multiplication operation on the input feature and a weight of the Q value of the first cross-attention block, to obtain the Q value of the first cross-attention block, similarly, perform a multiplication operation on the reference feature and a weight of the K value of the first cross-attention block, to obtain the K value of the first cross-attention block, and perform a multiplication operation on the Q value of the first cross-attention block and a transpose of the K value of the first cross-attention block, to obtain a cross-attention map. Next, the image generation apparatus may use the first cross-attention block to perform a multiplication operation on the reference feature and a weight of the V value of the first cross-attention block, to obtain the V value of the first cross-attention block, and perform a multiplication operation on the V value of the first cross-attention block and the cross-attention map, to obtain the first decoded feature outputted by the first cross-attention block.

In the self-attention mechanism, inputs for calculating a Q value, a K value, and a V value are the same. For example, for the first self-attention block, inputs for calculating the Q value, the K value, and the V value are all the third encoded feature. In a cross-attention mechanism, inputs for calculating a Q value and a K value are different, and inputs for calculating the K value and a V value are the same. For example, for the first cross-attention block, the input for calculating the Q value is the input feature, and the input for calculating the K value and the input for calculating the V value are both the reference feature.

For example, when determining, based on the first decoded feature, the second decoded feature inputted to the second self-attention block, the image generation apparatus may directly determine the first decoded feature as the second decoded feature, or may perform feature processing on the first decoded feature, to obtain the second decoded feature. For example, the image generation apparatus may perform processing such as feature extraction, feature construction, and feature selection on the first decoded feature, to obtain the second decoded feature. The processing such as feature extraction, feature construction, and feature selection may be performed by using related technical means in feature engineering or neural networks. This is not specifically limited in this application. For example, the image generation apparatus may use a residual block to perform feature extraction on the first decoded feature, and determine a feature obtained through feature extraction as the second decoded feature.

For example, for a specific process of the image generation apparatus determining the Q value, K value, and V value of the second self-attention block based on the second decoded feature, and determining, based on the Q value, K value, and V value of the second self-attention block, the third decoded feature outputted by the second self-attention block, the reference may be made to the processing process for the first self-attention block. To avoid repetition, details are not described herein again.

For example, when determining, based on the third decoded feature, the fourth decoded feature configured for upsampling, the image generation apparatus may directly determine the third decoded feature as the fourth decoded feature, or may perform feature processing on the third decoded feature, to obtain the fourth decoded feature. For example, the image generation apparatus may perform processing such as feature extraction, feature construction, and feature selection on the third decoded feature, to obtain the fourth decoded feature. The processing such as feature extraction, feature construction, and feature selection may be performed by using related technical means in feature engineering or neural networks. This is not specifically limited in this application. For example, the image generation apparatus may use a residual block to perform feature extraction on the third decoded feature, and determine a feature obtained through feature extraction as the fourth decoded feature.

For example, when determining the output image based on the fifth decoded feature, the image generation apparatus may directly determine the fifth decoded feature as the output image, or may perform feature processing on the fifth decoded feature to obtain the output image. For example, the image generation apparatus may perform processing such as feature extraction, feature construction, and feature selection on the fifth decoded feature, to obtain the output image. The processing such as feature extraction, feature construction, and feature selection may be performed by using related technical means in feature engineering or neural networks. This is not specifically limited in this application.

Exemplarily, a difference between the first cross-attention block and the second self-attention block lies in that: The three parts Q, K, and V of the second self-attention block are all obtained by using the same input (that is, the second decoded feature), while Q of the first cross-attention block is obtained by using the input feature, and the two parts K and V of the first cross-attention block are obtained by using the reference feature.

In this embodiment, the input feature and the reference feature may be fused by using the first cross-attention block, so that reference information needed by the input feature can be extracted from the reference feature to supplement missing details, such as missing background at a black border of the input image and missing facial details (where a 3D rendered image has relatively low precision).

In some embodiments, the decoder further includes a tooth matching model, and the upsampling of the fourth decoded feature to obtain the fifth decoded feature may be implemented as the following.

If the lip shape of the target object in the rendered image is open and the lip shape of the target object in the reference image is closed, the image generation apparatus uses the tooth matching model to obtain a tooth image matching the lip shape of the target object in the rendered image; then, performs feature extraction on the tooth image based on a size of the rendered image and a dimension of the lip shape of the target object in the rendered image, to obtain a tooth feature; and upsamples the third decoded feature based on the tooth feature, to obtain the fifth decoded feature.

For example, the tooth matching model may be a pre-trained model.

For example, when using the tooth matching model to obtain the tooth image matching the lip shape of the target object in the rendered image, the image generation apparatus may use the lip shape of the target object in the rendered image as an input, to predict the teeth of the target object, and output the tooth image. Alternatively, the image generation apparatus may select, from a tooth library based on the lip shape of the target object in the rendered image, the tooth image matching the lip shape of the target object in the rendered image. The tooth library may be a database formed by one or more tooth images.

For example, the image generation apparatus may obtain the tooth feature after performing feature extraction on the tooth image based on the size of the rendered image and the dimension of the lip shape of the target object in the rendered image. A size of the tooth feature may be the same as the size of the rendered image, and a size of an effective feature in the tooth feature may be the same as the size of the lip shape of the target object in the rendered image. Therefore, when upsampling the third decoded feature based on the tooth feature, the image generation apparatus may directly concatenate the tooth feature and the third decoded feature, and upsample a feature obtained through concatenation, to obtain the fifth decoded feature.

In this embodiment, the teeth matching the lip shape of the target object in the rendered image can be supplemented to the output image by using the tooth matching model, thereby improving realism and an image effect of the output image.

In some embodiments, the decoder further includes a second cross-attention block. The determining of the output image based on the fifth decoded feature may be implemented as the following.

The image generation apparatus determines, based on the fifth decoded feature, a sixth decoded feature inputted to the second cross-attention block; next, determines a Q value of the second cross-attention block based on the sixth decoded feature, determines a K value and V value of the second cross-attention block based on the reference feature, and determines a seventh decoded feature based on the Q value, K value, and V value of the second cross-attention block; and determines the output image based on the seventh decoded feature.

For example, when determining, based on the fifth decoded feature, the sixth decoded feature inputted to the second cross-attention block, the image generation apparatus may directly determine the fifth decoded feature as the sixth decoded feature, or may perform feature processing on the fifth decoded feature, to obtain the sixth decoded feature. For example, the image generation apparatus may perform processing such as feature extraction, feature construction, and feature selection on the fifth decoded feature, to obtain the sixth decoded feature. The processing such as feature extraction, feature construction, and feature selection may be performed by using related technical means in feature engineering or neural networks. This is not specifically limited in this application. For example, the image generation apparatus may directly determine the fifth decoded feature as the sixth decoded feature.

For example, when determining the output image based on the seventh decoded feature, the image generation apparatus may directly determine the seventh decoded feature as the output image, or may perform feature processing on the seventh decoded feature to obtain the output image. For example, the image generation apparatus may perform processing such as feature extraction, feature construction, and feature selection on the seventh decoded feature, to obtain the output image. The processing such as feature extraction, feature construction, and feature selection may be performed by using related technical means in feature engineering or neural networks. This is not specifically limited in this application. For example, the image generation apparatus may use a residual block to perform feature extraction on the seventh decoded feature, use an upsampling layer to upsample a feature obtained through feature extraction, then use a residual block to perform feature extraction on a feature obtained through upsampling, and determine a feature obtained through feature extraction as the output image.

For example, for a specific process of the image generation apparatus determining the Q value of the second cross-attention block based on the sixth decoded feature, determining the K value and V value of the second cross-attention block based on the reference feature, and determining the seventh decoded feature based on the Q value, K value, and V value of the second cross-attention block, the reference may be made to a processing process for the first cross-attention block (where a difference lies only in different inputs). To avoid repetition, details are not described herein again.

FIG. 7 shows an example of a structure of a decoder according to an embodiment of this application.

As shown in FIG. 7, the first encoder may include four residual blocks, two upsampling layers, a second self-attention block, a first cross-attention block, and a second cross-attention block.

During actual processing, the image generation apparatus first uses the first cross-attention block to perform cross-attention processing on the input feature, to obtain the first decoded feature; and then uses a residual block to perform feature extraction on the first decoded feature, and determines a feature obtained through feature extraction as the second decoded feature. Next, the image generation apparatus may perform self-attention processing on the second decoded feature based on using the second self-attention block, to obtain the third decoded feature, use a residual block to perform feature extraction on the third decoded feature, to obtain the fourth decoded feature, and use an upsampling layer to upsample the fourth decoded feature, to obtain the fifth decoded feature. Then, the image generation apparatus may perform feature extraction on the fifth decoded feature (e.g., through a residual block), to obtain the sixth decoded feature, and use the second cross-attention block to perform cross-attention processing on the sixth decoded feature, to obtain the seventh decoded feature. Finally, the image generation apparatus may use a residual block to perform feature extraction on the seventh decoded feature, use an upsampling layer to upsample a feature obtained through feature extraction, then use a residual block to perform feature extraction on a feature obtained through upsampling, and determine a feature obtained through feature extraction as the output image.

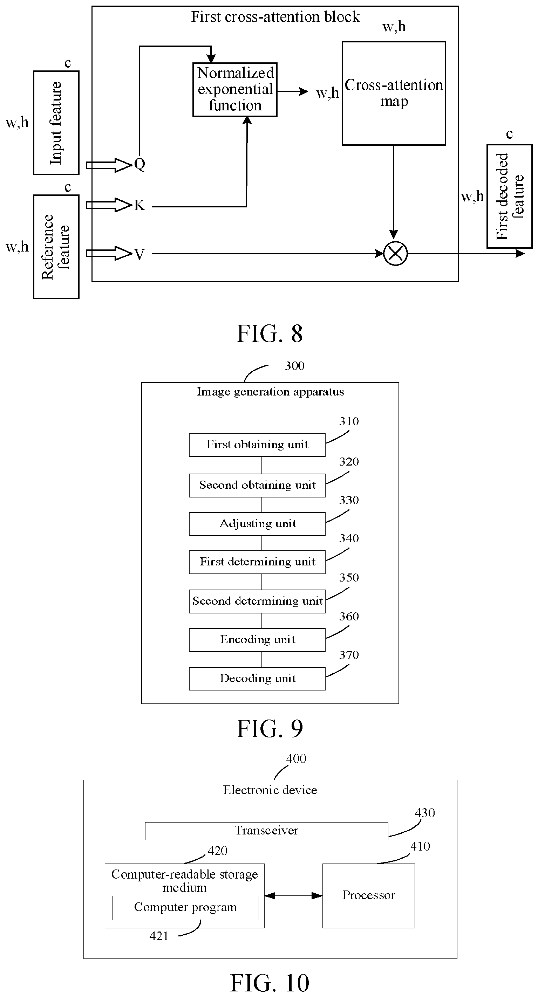

FIG. 8 shows an example of a structure of a first cross-attention block according to an embodiment of this application.

As shown in FIG. 8, the image generation apparatus determines the Q value of the first cross-attention block based on the input feature, determines the K value and V value of the first cross-attention block based on the reference feature, determines the cross-attention map based on the Q value and K value of the first cross-attention block by using the normalized exponential function, and then performs a multiplication operation on the V value of the first cross-attention block and the cross-attention map, to obtain the first decoded feature outputted by the first cross-attention block. Specifically, the image generation apparatus may use the first cross-attention block to perform a multiplication operation on the input feature and the weight of the Q value of the first cross-attention block, to obtain the Q value of the first cross-attention block, similarly, perform a multiplication operation on the reference feature and the weight of the K value of the first cross-attention block, to obtain the K value of the first cross-attention block, and then perform a multiplication operation on the Q value of the first cross-attention block and the transpose of the K value of the first cross-attention block, to obtain the cross-attention map. Next, the image generation apparatus may use the first cross-attention block to perform a multiplication operation on the reference feature and the weight of the V value of the first cross-attention block, to obtain the V value of the first cross-attention block, and then perform a multiplication operation on the V value of the first cross-attention block and the cross-attention map, to obtain the first decoded feature outputted by the first cross-attention block.

FIG. 7 shows merely an example of decoding provided in this application, and FIG. 8 shows merely an example of a first cross-attention block provided in this application. The foregoing examples are not to be construed as a limitation to this application. For example, in another alternative embodiment, the seventh decoded feature may be directly determined as the output image. In other words, an optimal residual block and the last upsampling layer from left to right in the decoder may be omitted. For another example, a new residual block or another module may be added. For another example, the first cross-attention block or the second cross-attention block in the figures may alternatively be replaced with another module configured to perform feature fusion. For example, the two features may be directly concatenated and fused through two-dimensional (2D) convolution. For another example, the two features may alternatively be fused through deformable convolution.

In some embodiments, S220 may include:

The image generation apparatus samples texture of the target object in the input video, to obtain texture information of the target object; and then generates the rendered image based on the texture information.

For example, the image generation apparatus may perform feature extraction on the texture of the target object in the input video by using a neural network technology or another technology, to obtain the texture information. The texture information may be a high-frequency signal configured for reflecting a texture feature of a contour of a target object in an image in the input video. A contour is a line forming an outer edge of a shape or an object, and is an important foundation of technologies such as object detection, shape analysis, and object recognition. A high-frequency component in an image refers to a region where an image intensity (brightness/grayscale) changes sharply, that is, an edge (contour) usually mentioned. For example, if there is a line of text on a piece of white paper, focus naturally falls on the text rather than the blank paper. In this case, the text corresponds to a high-frequency signal, while the white paper corresponds to a low-frequency signal.

In conclusion, the contour of the target object is represented by the high-frequency component in an image.

For example, the image generation apparatus may use a pre-trained model configured to generate an image based on texture, and use the texture information as an input to obtain the rendered image, and output the rendered image.

In this embodiment, the image generation apparatus samples the texture of the target object in the input video, to obtain the texture information of the target object, and then generate the rendered image based on the texture information. This can ensure that the rendered image is a rendered image matching the facial contour of the target object in the input video, and ensure a realistic effect of the rendered image.

Preferred implementations of this application are described in detail above with reference to the accompanying drawings. However, this application is not limited to the specific details in the foregoing implementations. A plurality of simple deformations may be made to the technical solution of this application within a range of the technical concept of this application. These simple deformations fall within the protection scope of this application. For example, the technical features described in the foregoing specific implementations may be combined in any proper mode without conflict. To avoid unnecessary repetition, possible combinations are not described separately in this application. For another example, different implementations of this application may also be arbitrarily combined without departing from the idea of this application, and these combinations shall still be regarded as content disclosed in this application.

In the method embodiments of this application, sequence numbers of the foregoing processes do not indicate execution sequences. The execution sequences of the processes shall be determined based on functions and internal logic of the processes, and are not to be construed as any limitation to the implementation processes of embodiments of this application.

The foregoing describes the method provided in embodiments of this application. The apparatus provided in embodiments of this application is described below.

FIG. 9 is a schematic block diagram of an image generation apparatus 300 according to an embodiment of this application.

As shown in FIG. 9, the image generation apparatuses 300 may include:

a first obtaining unit 310, configured to obtain an input video and an input audio;

a second obtaining unit 320, configured to obtain a rendered image matching a facial contour of the target object in the input video;

an adjustment unit 330, configured to adjust, based on an audio unit in the input audio, a lip shape of the target object in the rendered image to match the audio unit, so as to obtain an input image;

a first determining unit 340, configured to sample the input video to obtain an image sequence, and determine, from the image sequence, an image driven by the audio unit;

a second determining unit 350, configured to determine a reference image of the input image based on the image driven by the audio unit;

an encoding unit 360, configured to encode the input image and the reference image, to obtain an input feature of the input image and a reference feature of the reference image; and

a decoding unit 370, configured to decode the input feature and the reference feature, to obtain an output image.

In some embodiments, the first determining unit 340 is specifically configured to:
determine, in a case that a quantity of images in the image sequence is equal to a quantity of units included in the input audio, an image, whose sampling sequence number is the same as a position sequence number the audio unit in the input audio, in the image sequence as the image driven by the audio unit.

In some embodiments, the second determining unit 350 is specifically configured to:
determine as the reference image the image driven by the audio unit.

In some embodiments, the second determining unit 350 is specifically configured to:

select, from the image sequence according to a sampling time sequence, a plurality of images preceding and following the image driven by the audio unit; and

select the reference image from among the plurality of images.

In some embodiments, the input image is encoded by using a first encoder, and the first encoder includes a residual block, a downsampling layer, and a first self-attention block.

The encoding unit 360 is specifically configured to:

perform feature extraction on the input image by using the residual block, to obtain a first encoded feature;

downsample the first encoded feature by using the downsampling layer, to obtain a second encoded feature;

determine, based on the second encoded feature, a third encoded feature inputted to the first self-attention block;

determine a Q value, K value, and V value of the first self-attention block based on the third encoded feature, and determine, based on the Q value, K value, and V value of the first self-attention block, a fourth encoded feature outputted by the first self-attention block; and

determine the input feature based on the fourth encoded feature.

In some embodiments, the reference image is encoded by using a second encoder. Structures of the first encoder and the second encoder are the same, and the first encoder and the second encoder share parameters with each other.

In some embodiments, the input feature and the reference feature are decoded by using a decoder; the decoder includes a first cross-attention block, a residual block, a second self-attention block, and an upsampling layer.

The decoding unit 370 is specifically configured to:

determine a Q value of the first cross-attention block based on the input feature, determine a K value and V value of the first cross-attention block based on the reference feature, and determine a first decoded feature based on the Q value, K value, and V value of the first cross-attention block;

determine, based on the first decoded feature, a second decoded feature inputted to the second self-attention block;

determine a Q value, K value, and V value of the second self-attention block based on the second decoded feature, and determine, based on the Q value, K value, and V value of the second self-attention block, a third decoded feature outputted by the second self-attention block;

determine, based on the third decoded feature, a fourth decoded feature configured for upsampling;

upsample the fourth decoded feature, to obtain a fifth decoded feature; and

determine the output image based on the fifth decoded feature.

In some embodiments, the decoder further includes a second cross-attention block.

The decoding unit 370 is specifically configured to:

determine, based on the fifth decoded feature, a sixth decoded feature inputted to the second cross-attention block;

determine a Q value of the second cross-attention block based on the sixth decoded feature, determine a K value and V value of the second cross-attention block based on the reference feature, and determine a seventh decoded feature based on the Q value, K value, and V value of the second cross-attention block; and

determine the output image based on the seventh decoded feature.

In some embodiments, the decoder further includes a tooth matching model.

The decoding unit 370 is specifically configured to:

obtain, by using the tooth matching model in a case that the lip shape of the target object in the rendered image is open and the lip shape of the target object in the reference image is closed, a tooth image matching the lip shape of the target object in the rendered image;

perform feature extraction on the tooth image based on the size of the rendered image and the dimension of the lip shape of the target object in the rendered image, to obtain the tooth feature; and

upsample the third decoded feature based on the tooth feature, to obtain the fifth decoded feature.

In some embodiments, the second obtaining unit 320 is specifically configured to:

sample texture of the target object in the input video, to obtain texture information of the target object; and

generate the rendered image based on the texture information.

The apparatus embodiments and the method embodiments may correspond to each other. For similar descriptions, refer to the method embodiments. To avoid repetition, details are not described herein again. Specifically, the image generation apparatus 300 may correspond to an entity that performs the method 200 in embodiments of this application, and units in the image generation apparatus 300 are respectively configured to implement corresponding procedures in the method 200. For brevity, details are not described herein again.

The units of the image generation apparatus 300 in embodiments of this application are divided based on logical functions. In actual applications, a function of one unit may be implemented by a plurality of units, or functions of a plurality of units may be implemented by one unit, and these functions may be even implemented cooperatively by one or more other units. For example, some or all of units of the image generation apparatus 300 may be combined into one or more other units. One (or more) of the units of the image generation apparatus 300 may be further split into a plurality of units with finer functions. In this way, the same operations can be implemented, without affecting achievement of the technical effects of embodiments of this application. For another example, the image generation apparatus 300 may further include another unit. In actual applications, these functions may alternatively be cooperatively implemented by another unit, or may be cooperatively implemented by a plurality of units.

In another embodiment of this application, a computer program (including program code) that can perform operations in the corresponding method may be run on a general-purpose computing device, such as a general-purpose computer, that includes processing elements and storage elements such as a central processing unit (CPU), a random access storage medium (RAM), and a read-only storage medium (ROM), to construct the image generation apparatus 300 in embodiments of this application, and to implement the method in embodiments of this application. The computer program may be stored on, for example, a computer-readable storage medium, and may be installed in an electronic device through the computer-readable storage medium and run on the electronic device, to implement the corresponding method in embodiments of this application. The foregoing units may be implemented in the form of hardware, or may be implemented through instructions in the form of software, or may be implemented in the form of a combination of hardware and software. The operations in the method embodiments of this application may be completed by an integrated logic circuit of hardware in a processor and/or instructions in the form of software. The operations of the method disclosed in embodiments of this application may be directly embodied as being completed by a hardware decoding processor, or may be completed by a combination of hardware and software in a decoding processor. In some embodiments, the software may be located on a storage medium that is mature in the art, for example, a random access memory, a flash memory, a read-only memory, a programmable read-only memory, an electrically erasable programmable memory, or a register. The storage medium is in a memory. A processor reads information in the memory and completes the operations in the foregoing method embodiment in combination with hardware thereof.

FIG. 10 is a schematic diagram of a structure of an electronic device 400 according to an embodiment of this application.

As shown in FIG. 10, the electronic device 400 includes at least a processor 410 and a computer-readable storage medium 420. The processor 410 and the computer-readable storage medium 420 may be connected through a bus or in another manner. The computer-readable storage medium 420 is configured to store a computer program 421. The computer program 421 includes computer instructions. The processor 410 is configured to execute the computer instructions stored on the computer-readable storage medium 420. The processor 410 is a computing core and a control core of the electronic device 400, is configured to implement one or more computer instructions, and is specifically configured to load and execute one or more computer instructions to implement a corresponding procedure in a method or a corresponding function.

For example, the processor 410 may be a central processing unit (CPU). The processor 410 may include, but is not limited to, a general-purpose processor, a digital signal processor (DSP), an application-specific integrated circuit (ASIC), a field-programmable gate array (FPGA), or another programmable logic device, a discrete gate or transistor logic device, or a discrete hardware component.

For example, the computer-readable storage medium 420 may be a high-speed RAM memory, or may be a non-volatile memory, for example, at least one magnetic disk memory. In some embodiments, the computer-readable storage medium 420 may alternatively be at least one computer-readable storage medium located far away from the foregoing processor 410. Specifically, the computer-readable storage medium 420 includes, but is not limited to, a volatile memory and/or a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM) serving as an external cache. Through illustrative but not limited description, RAMs in many forms, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct Rambus RAM (DRRAM), are available.

As shown in FIG. 10, the electronic device 400 may further include a transceiver 430.

The processor 410 may control the transceiver 430 to communicate with another device, and specifically, may send information or data to another device, or receive information or data transmitted by another device. The transceiver 430 may include a transmitter and a receiver. The transceiver 430 may further include an antenna. There may be one or more antennas.

Various components in the electronic device 400 are connected via a bus system. In addition to a data bus, the bus system further includes a power bus, a control bus, and a status signal bus. The electronic device 400 may be any electronic device having a data processing capability. The computer-readable storage medium 420 stores a first computer instruction. The processor 410 loads and executes the first computer instruction stored on the computer readable storage medium 420, to implement a corresponding operation in the method embodiment shown in FIG. 1. During specific implementation, the first computer instruction in the computer-readable storage medium 420 is loaded by the processor 410 to perform a corresponding operation. To avoid repetition, details are not described herein again.

In another aspect of this application, an embodiment of this application provide a chip. The chip may be an integrated circuit chip having a signal processing capability, and may implement or perform the methods, operations, and logic block diagrams that are disclosed in embodiments of this application. The chip may also be referred to as a system-level chip, a system chip, a system on a chip, a system on chip, or the like. The chip may be used in various electronic devices on which the chip can be mounted, so that the device having the chip mounted thereon can perform corresponding operations in the methods or logical block diagrams disclosed in embodiments of this application. For example, the chip may be configured to implement one or more computer instructions, and may be specifically configured to load and execute the one or more computer instructions to implement a corresponding procedure in a method or a corresponding function.

In another aspect of this application, an embodiment of this application provides a computer-readable storage medium (memory). The computer-readable storage medium is a memory device of a computer, and is configured to store a program and data. The computer-readable storage medium here may include both a built-in storage medium of the computer and an extended storage medium supported by the computer. The computer-readable storage medium provides a storage space, storing an operating system of the electronic device. The storage space stores a computer instruction configured to be loaded and executed by the processor. When the computer instruction is read and executed by the processor of the computer device, the computer device is caused to perform corresponding operations in the methods or logical block diagrams disclosed in embodiments of this application.

In another aspect of this application, an embodiment of this application provides a computer program product or a computer program. The computer program product or the computer program includes computer instructions. The computer instructions are stored on a computer-readable storage medium. A processor of a computer device reads the computer instructions from the computer-readable storage medium, and the processor executes the computer instructions, so that the computer device performs corresponding operations in the methods or logical block diagrams disclosed in embodiments of this application. In other words, when the solutions provided in this application is implemented by using software, all or some of the solutions may be implemented in the form of a computer program product or a computer program. The computer program product or the computer program includes one or more computer instructions. When the computer program instructions are loaded and executed on a computer, all or some of the procedures or functions in embodiments of this application are implemented.

The computer in this application may be a general-purpose computer, a special-purpose computer, a computer network, or another programmable apparatus. The computer instructions in this application may be stored on a computer-readable storage medium, or transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (DSL)) or a wireless (for example, infrared, radio, or microwave) manner.

A person of ordinary skill in the art may be aware that the exemplary units and operations described with reference to the embodiments disclosed in this specification can be implemented by electronic hardware or a combination of computer software and electronic hardware. Whether the functions are executed using hardware or software depends on particular applications and design constraint conditions of technical solutions. In other words, a person skilled in the art may use different methods to implement the described functions for each particular application, but such implementation is not to be considered beyond the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims. For example, the specific technical features described in the foregoing specific implementations may be combined in any proper manner without conflict. For another example, different implementations of this application may alternatively be arbitrarily combined without departing from the basic idea of this application. These combinations shall still be regarded as content disclosed in this application.

**Claims**

1. An image generation method, comprising:

   obtaining an input video and an input audio;
   obtaining a rendered image matching a facial contour of a target object in the input video;
   adjusting, based on an audio unit in the input audio, a lip shape of the target object in the rendered image to match the audio unit so as to obtain an input image;
   sampling the input video to obtain an image sequence, and determining, from the image sequence, an image driven by the audio unit;
   determining a reference image of the input image based on the image driven by the audio unit;
   encoding the input image and the reference image, to obtain an input feature of the input image and a reference feature of the reference image; and
   decoding the input feature and the reference feature, to obtain an output image.

2. The method according to claim 1, wherein sampling the input video to obtain the image sequence, and determining, from the image sequence, the image driven by the audio unit comprises:
   determining, in a case that a quantity of images in the image sequence is equal to a quantity of units comprised in the input audio, an image, whose sampling sequence number is the same as a position sequence number of the audio unit in the input audio, in the image sequence as the image driven by the audio unit.

3. The method according to claim 1 or 2, wherein determining the reference image of the input image based on the image driven by the audio unit comprises:
   determining, as the reference image, the image driven by the audio unit.

4. The method according to any one of claims 1 to 3, wherein determining the reference image of the input image based on the image driven by the audio unit in the input video comprises:

   selecting, from the image sequence according to a sampling time sequence, a plurality of images preceding and following the image driven by the audio unit; and
   selecting the reference image from among the plurality of images.

5. The method according to any one of claims 1 to 4, wherein the input image is encoded through a first encoder, and the first encoder comprises a residual block, a downsampling layer, and a first self-attention block; and
   encoding the input image and the reference image, to obtain the input feature of the input image and the reference feature of the reference image comprises:

   extracting a first encoded feature of the input image through the residual block;
   downsampling the first encoded feature through the downsampling layer, to obtain a second encoded feature;
   determining, based on the second encoded feature, a third encoded feature inputted to the first self-attention block;
   determining a Q value, K value, and V value of the first self-attention block based on the third encoded feature, and determining, based on the Q value, K value, and V value of the first self-attention block, a fourth encoded feature outputted by the first self-attention block; and
   determining the input feature based on the fourth encoded feature.

6. The method according to claim 5, wherein the reference image is encoded through a second encoder, the first encoder has a same structure as the second encoder, and the first encoder and the second encoder share parameters with each other.

7. The method according to any one of claims 1 to 6, wherein the input feature and the reference feature are decoded through a decoder, and the decoder comprises a first cross-attention block, a residual block, a second self-attention block, and an upsampling layer; and
decoding the input feature and the reference feature, to obtain the output image comprises:

determining a Q value of the first cross-attention block based on the input feature, determining a K value and V value of the first cross-attention block based on the reference feature, and determining a first decoded feature based on the Q value, K value, and V value of the first cross-attention block;
determining, based on the first decoded feature, a second decoded feature inputted to the second self-attention block;
determining a Q value, K value, and V value of the second self-attention block based on the second decoded feature, and determining, based on the Q value, K value, and V value of the second self-attention block, a third decoded feature outputted by the second self-attention block;
determining, based on the third decoded feature, a fourth decoded feature configured for upsampling;
upsampling the fourth decoded feature, to obtain a fifth decoded feature; and
determining the output image based on the fifth decoded feature.

8. The method according to claim 7, wherein the decoder further comprises a second cross-attention block; and
determining the output image based on the fifth decoded feature comprises:

determining, based on the fifth decoded feature, a sixth decoded feature inputted to the second cross-attention block;
determining a Q value of the second cross-attention block based on the sixth decoded feature, determining a K value and V value of the second cross-attention block based on the reference feature, and determining a seventh decoded feature based on the Q value, K value, and V value of the second cross-attention block; and
determining the output image based on the seventh decoded feature.

9. The method according to claim 7 or 8, wherein the decoder further comprises a tooth matching model; and
upsampling the fourth decoded feature, to obtain the fifth decoded feature comprises:

obtaining, through the tooth matching model in a case that the lip shape of the target object in the rendered image is open and the lip shape of the target object in the reference image is closed, a tooth image matching the lip shape of the target object in the rendered image;
extracting a tooth feature of the tooth image based on a size of the rendered image and a dimension of the lip shape of the target object in the rendered image; and
upsampling the fourth decoded feature based on the tooth feature, to obtain the fifth decoded feature.

10. The method according to any one of claims 1 to 9, wherein obtaining the rendered image matching the facial contour of the target object in the input video comprises:

sampling texture of the target object in the input video, to obtain texture information of the target object; and
generating the rendered image based on the texture information.

11. An image generation apparatus, comprising:

a first obtaining unit, configured to obtain an input video and an input audio;
a second obtaining unit, configured to obtain a rendered image matching a facial contour of a target object in the input video;
an adjustment unit, configured to adjust, based on an audio unit in the input audio, a lip shape of the target object in the rendered image to match the audio unit so as to obtain an input image;
a first determining unit, configured to sample the input video to obtain an image sequence, and determine, from the image sequence, an image driven by the audio unit;
a second determining unit, configured to determine a reference image of the input image based on the image driven by the audio unit;
an encoding unit, configured to encode the input image and the reference image, to obtain an input feature of the input image and a reference feature of the reference image; and
a decoding unit, configured to decode the input feature and the reference feature, to obtain an output image.

**12.** An electronic device, comprising:

a processor, configured to execute a computer program; and
a computer-readable storage medium for storing the computer program thereon that, when executed by the processor, performs the method according to any one of claims 1 to 10.

**13.** A computer-readable storage medium, configured to store a computer program for causing a computer to perform the method according to any one of claims 1 to 10.

**14.** A computer program product, comprising a computer program/instructions that, when executed by a processor, performs the method according to any one of claims 1 to 10.

100

Server cluster

Webpage server — 111

— 110

112

113

Access server — Data server

120

Wireless or wired network

131

132

Application

Application

User — 141

User — 142

## FIG. 1

200

S210
Obtain an input video and an input audio

S220
Obtain a rendered image matching a facial contour of a target object in the input video

S230
Adjust, based on an audio unit in the input audio, a lip shape of the target object in the rendered image to match the audio unit so as to obtain an input image

S240
Sample the input video to obtain an image sequence, and determine, from the image sequence, an image driven by the audio unit

S250
Determine a reference image of the input image based on the image driven by the audio unit

S260
Encode the input image and the reference image, to obtain an input feature of the input image and a reference feature of the reference image

S270
Decode the input feature and the reference feature, to obtain an output image

## FIG. 2

Audio-driven rendered image → Data construction process → Constructed image → Image generation model → Output image

## FIG. 3

FIG. 4

FIG. 5

FIG. 6

FIG. 7

First cross-attention block

Input feature

Reference feature

Normalized exponential function

Cross-attention map

First decoded feature

FIG. 8

300

Image generation apparatus

First obtaining unit — 310

Second obtaining unit — 320

Adjusting unit — 330

First determining unit — 340

Second determining unit — 350

Encoding unit — 360

Decoding unit — 370

FIG. 9

400

Electronic device

Transceiver — 430

Computer-readable storage medium — 420

Computer program — 421

Processor — 410

FIG. 10

## INTERNATIONAL SEARCH REPORT

| International application No. |
|---|
| **PCT/CN2024/112796** |

**A. CLASSIFICATION OF SUBJECT MATTER**

H04N21/44(2011.01)i; H04N21/439(2011.01)i; G06T 9/00(2006.01)i

According to International Patent Classification (IPC) or to both national classification and IPC

**B. FIELDS SEARCHED**

Minimum documentation searched (classification system followed by classification symbols)

IPC: H04N, G06T

Documentation searched other than minimum documentation to the extent that such documents are included in the fields searched

Electronic data base consulted during the international search (name of data base and, where practicable, search terms used)

CNABS, CNTXT, CNKI, VEN, USTXT, WOTXT, EPTXT: 音频, 语音, 驱动, 口型, 渲染, 数字人, 参考, 编码, 解码, audio, voice, speak, speech, mouth, lip, face, human, digital, virtual, render, driv+

**C. DOCUMENTS CONSIDERED TO BE RELEVANT**

| Category* | Citation of document, with indication, where appropriate, of the relevant passages | Relevant to claim No. |
|---|---|---|
| PX | CN 117579889 A (TENCENT TECHNOLOGY (SHENZHEN) CO., LTD.) 20 February 2024 (2024-02-20)<br>claims 1-13 | 1-14 |
| A | CN 116385629 A (XIAMEN HEIJING TECHNOLOGY CO., LTD.) 04 July 2023 (2023-07-04)<br>entire document | 1-14 |
| A | CN 113554737 A (TENCENT TECHNOLOGY (SHENZHEN) CO., LTD.) 26 October 2021 (2021-10-26)<br>entire document | 1-14 |
| A | CN 112562722 A (XINHUA ZHIYUN TECHNOLOGY CO., LTD.) 26 March 2021 (2021-03-26)<br>entire document | 1-14 |
| A | CN 114581980 A (BEIJING JINGDONG SHANGKE INFORMATION TECHNOLOGY CO., LTD.) 03 June 2022 (2022-06-03)<br>entire document | 1-14 |

☐ Further documents are listed in the continuation of Box C.　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **24 November 2024** | **25 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/112796**

| Patent document cited in search report | | | Publication date (day/month/year) | Patent family member(s) | Publication date (day/month/year) |
|---|---|---|---|---|---|
| CN | 117579889 | A | 20 February 2024 | None | |
| CN | 116385629 | A | 04 July 2023 | None | |
| CN | 113554737 | A | 26 October 2021 | None | |
| CN | 112562722 | A | 26 March 2021 | None | |
| CN | 114581980 | A | 03 June 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311403638